# EUROPEAN PATENT APPLICATION

(11) **EP 3 582 389 A1**
(43) Date of publication of application: **18.12.2019**
(21) Application number: 19178654.0
(22) Date of filing: 06.06.2019
(51) Int. Cl.: H02P 6/21, H02P 6/20, H02P 6/14

(54) **BRUSHLESS DC MOTOR CONTROL METHOD AND CONTROL DEVICE**

(30) Priority: 11.06.2018 JP 2018111142
(71) Applicant: Nidec Sankyo Corporation, Nagano 393-8511 (JP)
(72) Inventor: KARASAWA, Toshiyuki, Nagano, 393-8511 (JP); YAHATA, Akihiro, Nagano, 393-8511 (JP); MOMOSE, Tetsuo, Nagano, 393-8511 (JP)
(74) Representative: Becker Kurig Straus

(57) **Abstract**

To provide a smooth transition from forced commutation to controlled commutation without causing a step-out or the like at a start of a sensorless brushless DC motor including no sensor configured to detect a rotational position of a rotor. Implemented are: a first energization step of energizing a motor (1) during a first period in any first excitation pattern at a start of the motor (1); and a second energization step of energizing the motor (1), after the first energization step, during a second period longer than the first period in a second excitation pattern advanced from the first excitation pattern by a predetermined angle, for example, 120°, in a rotation instruction direction. After the second energization step, forced commutation is started so that the motor (1) rotates from a rotational position corresponding to the second excitation pattern.

## Description

### BACKGROUND

### Field of the Invention

At least an embodiment of the present invention relates to control of a brushless direct current (DC) motor, and more particularly, to a control method and a control device for controlling a start of a sensorless brushless DC motor including no sensor configured to detect a position of a rotor.

### Description of the Related Documents

A brushless DC motor is driven by passing a current through a coil of the motor by an inverter according to a rotor position of the motor. For example, in a three-phase brushless DC motor provided with U-phase, V-phase, and W-phase coils, a current is passed from the W-phase to the U-phase at a certain timing, a current is passed from the V-phase to the U-phase at the next timing, a current is passed from the V-phase to the W-phase at the next timing, to form a rotating magnetic field in the motor and the rotor rotates by the rotating magnetic field. In the following description, when excitation is performed by passing a current from a coil of one phase to a coil of another phase of the motor, a combination of these phases is called an excitation pattern. Further, an excitation pattern in which a current is passed from an A-phase coil to a B-phase coil is expressed as "A-> B". In the three-phase brushless DC motor, for example, the excitation pattern is switched in the order of W-> U, V-> U, V-> W, U-> W, U-> V, W-> V, further, returns to the first W-> U excitation pattern, and thus, a rotating magnetic field for one cycle is generated in the motor, and the rotor rotates to follow the rotating magnetic field. Here, one rotation of the motor is realized by six excitation patterns, and thus, one excitation pattern corresponds to 60° in rotation angle. When the motor is reversely rotated, the direction of the excitation pattern may be reversed. It is noted that, as apparent to those skilled in the art, that the direction of the excitation pattern for rotating the three-phase brushless DC motor is not limited to the one indicated herein.

In a sensorless brushless DC motor including no sensor configured to detect the position of the rotor, such as a Hall element, a sensorless drive system is adopted in which a rotational position of the rotor is estimated from a back electromotive force (speed electromotive force) generated in the coil of each of the phases to switch the energization of the coil of each of the phases. However, if the rotational speed is low, for example, immediately after a start of the motor, a sufficient voltage is not generated, and the rotational position cannot be estimated. Therefore, in the sensorless brushless DC motor, open loop control is performed regardless of the rotational position at the start of the motor, and the inverter is controlled by an open loop control signal to switch the excitation pattern. Then, after the number of rotations of the motor reaches a certain value and the rotational position of the rotor can be accurately estimated, the excitation pattern is switched according to the rotational position. Driving the motor by the open loop control signal immediately after the start is called forced commutation, and driving the motor by switching the excitation pattern according to the rotational position is called controlled commutation or normal commutation.

Japanese Unexamined Patent Application Publication No. S55-5035 (hereinafter, referred to as "Patent Literature 1") discloses a start method of a sensorless brushless DC motor, and in the start method, after the motor reaches a certain the number of rotations by forced commutation, an inverter output is temporarily stopped to provide a non-energization period to stop energization of the motor, an induced voltage generated in a terminal of the motor during the non-energization period is detected, an inverter control signal is synchronized to a period of the induced voltage, and afterwards, the inverter output is restarted to start controlled commutation. Japanese Unexamined Patent Application Publication No. 2013-081370 (hereinafter, referred to as "Patent Literature 2") discloses a technology in which when the sensorless brushless DC motor is started, a plurality of excitation patterns capable of driving the motor are selected, the motor is energized sequentially in each of the excitation patterns within a range where the rotor does not rotate, and a stop position of the rotor is determined based on a pulse width of a pulse voltage generated in the coil when the excitation pattern is switched. Further, Patent Literature 2 discloses a technology in which the motor is energized only during an initial energization time in an excitation pattern corresponding to the stop position of the rotor determined as described above to perform forced commutation, and after the end of the forced commutation, a non-energization period is provided to free run the rotor and the position of the rotor is evaluated based on a time interval of a signal of the induced voltage generated in the terminal of the motor during the non-energization period, to start controlled commutation.

Further, Japanese Unexamined Patent Application Publication No. 2014-128058 (hereinafter, referred to as "Patent Literature 3") relates to a brushless DC motor including a position sensor configured to detect the position of the rotor, and discloses a technology in which at a start of the brushless DC motor, a non-energization period is provided immediately after the start of forced commutation at a phase switching timing according to the rotor position and a predetermined forced commutation frequency, and normal commutation is started at the phase switching timing according to a positional signal generated during inertial rotation of the rotor.
Patent Literature 1: Japanese Unexamined Patent Application Publication No. S55-5035
Patent Literature 2: Japanese Unexamined Patent Application Publication No. 2013-081370
Patent Literature 3: Japanese Unexamined Patent Application Publication No. 2014-128058

### SUMMARY

When a sensorless brushless DC motor is started, forced commutation is performed, however, even if forced commutation is performed, the motor may not reach a predetermined rotational speed, and thus, stable rotation may not be achieved, even if transitioning to controlled commutation. In particular, a phenomenon called step-out may occur in which the rotational position of the rotor and the excitation pattern completely diverge and the rotational speed of the motor does not increase. In the method described in Patent Literature 2 mentioned above, the motor is energized in various excitation patterns within the range where the rotor does not rotate, to determine the stop position of the rotor, however, the stop position is not necessarily determined accurately. Further, the initial energization time for performing forced commutation is a time when the rotor makes not more than one rotation, and thus, the position of the rotor may not be accurately determined during the non-energization period. As a result, in the method described in Patent Literature 2, the drive may not smoothly transition to controlled commutation.

An object of at least an embodiment of the present invention is to provide a control method and a control device for a brushless DC motor, in which even a sensorless brushless DC motor can transition smoothly from forced commutation to controlled commutation without causing a step-out or the like at the start of the motor.

A control method according to at least an embodiment of the present invention is a control method for starting a motor that is a brushless DC motor including no sensor configured to detect a rotational position of a rotor. The control method includes: a first energization step of energizing the motor during a first period in any first excitation pattern at the start of the motor; and a second energization step of energizing the motor, after the first energization step, during a second period longer than the first period in a second excitation pattern advanced from the first excitation pattern by a predetermined angle in a rotation instruction direction. After the second energization step, drive of the motor by forced commutation is started so that the motor rotates from a rotational position corresponding to the second excitation pattern.

When the motor is energized in the first excitation pattern in the first energization step, a magnetic field corresponding to the first excitation pattern is generated in the motor, a permanent magnet of the rotor is attracted to this magnetic field, and the rotor moves toward a position corresponding to the first excitation pattern. As a result, forced commutation can be started from a state where the rotational position of the rotor is known to prevent occurrence of an energizing a motor or the like. However, if the position of the rotor in an initial state is displaced by 180° from the position corresponding to the first excitation pattern, the rotor may remain in the displaced position without moving, even if energization is performed in the first excitation pattern, and in this case, a step-out or the like may occur. Thus, in at least an embodiment of the present invention, because, after the first energization step, a second energization step is provided in which the motor is energized in a second excitation pattern advanced from the first excitation pattern by a predetermined angle in a rotation instruction direction, the rotor surely moves to a position corresponding to the second excitation pattern and is positioned in the second energization step, even if the rotor moves toward the position corresponding to the first excitation pattern in the first energization step and the rotor remains in the position displaced by 180° from the first excitation pattern. Further, by making the energization time of the second energization step (second period) longer than the energization time of the first energization step (first period), the rotor can be stabilized in a position corresponding to the second excitation pattern. As a result, according to the control method of at least an embodiment of the present invention, after the second energization step, when drive of the motor by forced commutation is started so that the motor rotates from a rotational position corresponding to the second excitation pattern, the occurrence of a step-out and the like can be surely prevented regardless of the initial position of the rotor, and further, the transition from forced commutation to controlled commutation can be smoothly performed. An optimum value of the first period is determined according to inertia of the motor including a load, an excitation current, and the like, and the first period is set to, for example, about 100 milliseconds. The second period is set to, for example, several hundred milliseconds.

A control device according to at least an embodiment of the present invention is a control device for starting a motor that is a brushless DC motor including no sensor configured to detect a rotational position of a rotor. The control device includes: an inverter coupled to a terminal of each coil of the motor and configured to energize the coil by PWM drive; and a controller configured to control drive of the motor by controlling the inverter, the controller being configured to control the inverter so that: at a start of the motor, the motor is energized during a first period in any first excitation pattern; after the first period, the motor is energized during a second period longer than the first period, in a second excitation pattern advanced from the first excitation pattern by a predetermined angle in a rotation instruction direction; and after the second period, drive of the motor by forced commutation is started so that the motor rotates from a rotational position corresponding to the second excitation pattern.

The control device according to at least an embodiment of the present invention includes: the inverter configured to energize a coil of the motor; and the controller configured to control the inverter to drive the motor based on the control method according to at least an embodiment of the present invention described above, and thus, at the start of the sensorless brushless DC motor, occurrence of a step-out and the like can be surely prevented regardless of the initial position of the rotor, and further, transition from forced commutation to controlled commutation can be smoothly performed.

In at least an embodiment of the present invention, a widely, commonly used three-phase brushless DC motor can be used for the brushless DC motor, and 120° can be employed for the predetermined angle, for example. The predetermined angle being the difference between the first excitation pattern and the second excitation pattern when expressed by the rotation angle of the motor, can be, for example, 60°, 240°, 300°, and the like, and the time required for positioning the rotor can be minimized when the three-phase brushless DC motor employs 120°.

When the rotor is positioned at a position corresponding to the second excitation pattern by energization, the rotor vibrates around the position corresponding to the second excitation pattern in a vibration period determined according to inertia of the motor including a load and an excitation current. Thus, in at least an embodiment of the present invention, the vibration period of the rotor is controlled by adjusting a voltage to be applied to the motor in the second energization step based on the inertia of the motor including a load to adjust the excitation current, and thus, the time required for positioning the rotor can be reduced.

In at least an embodiment of the present invention, it is preferable that, during drive by forced commutation, the motor is driven by shortening a switching interval of an excitation pattern so that a rotational speed of the rotor of the motor increases at a predetermined rate of increase; when the rotational speed reaches a predetermined value, energization of the motor is stopped to rotate the motor with inertia in a period provided as a non-energization period, and an induced voltage generated at the terminal of the motor in the non-energization period is detected; and the rotational position of the motor is determined from the detected induced voltage, and energization of the motor is restarted using an excitation pattern based on the determined rotational position and an excitation pattern switching timing, to start drive of the motor by controlled commutation. When the motor transitions from forced commutation to controlled commutation, a non-energization period is interposed, the position of the motor is determined based on the induced voltage detected in the non-energization period, and smoother transition to controlled commutation is possible by starting controlled commutation based on the determined position.

When the non-energization period is provided, the induced voltage can be detected a plurality of times in the non-energization period to calculate the rotational speed of the motor, and an acceleration can be set based on the calculated rotational speed when energization of the motor is restarted. With such a configuration, the motor can be accelerated more smoothly when transitioning to controlled commutation.

According to at least an embodiment of the present invention, a sensorless brushless DC motor can be started so that transition from forced commutation to controlled commutation can be smoothly performed without causing a step-out or the like.

### BRIEF DESCRIPTION OF THE DRAWINGS

Embodiments will now be described, by way of example only, with reference to the accompanying drawings which are meant to be exemplary, not limiting, and wherein like elements are numbered alike in several Figures, in which:

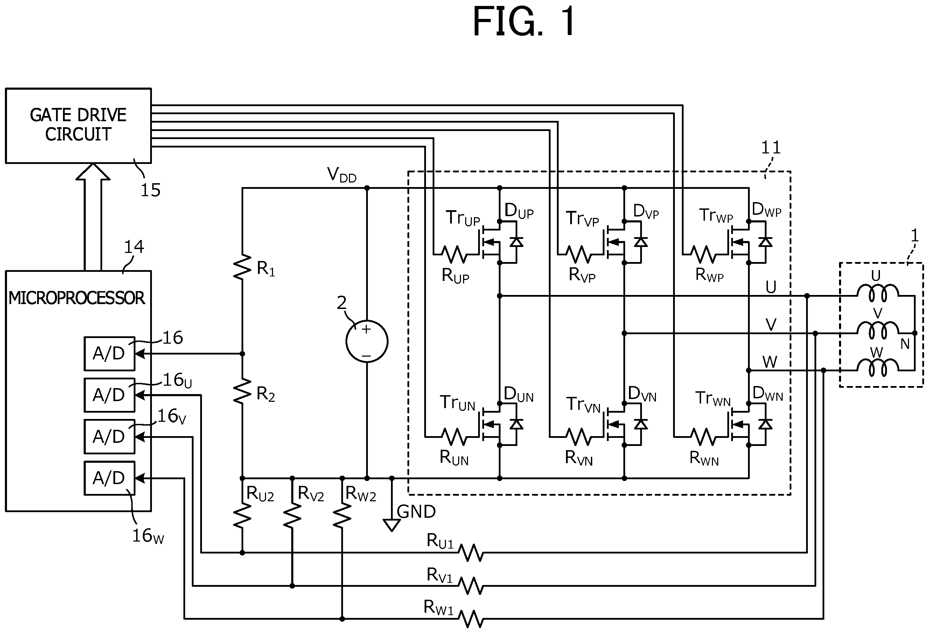

FIG. 1 is a block diagram illustrating a configuration of a control device according to one embodiment of the present invention;
FIG. 2 is a diagram for explaining an operation at a start of a motor;
FIG. 3 is a diagram for explaining switching from forced commutation to controlled commutation; and
FIG. 4 is a waveform diagram illustrating a terminal voltage of the motor during switching from forced commutation to controlled commutation.

### DETAILED DESCRIPTION

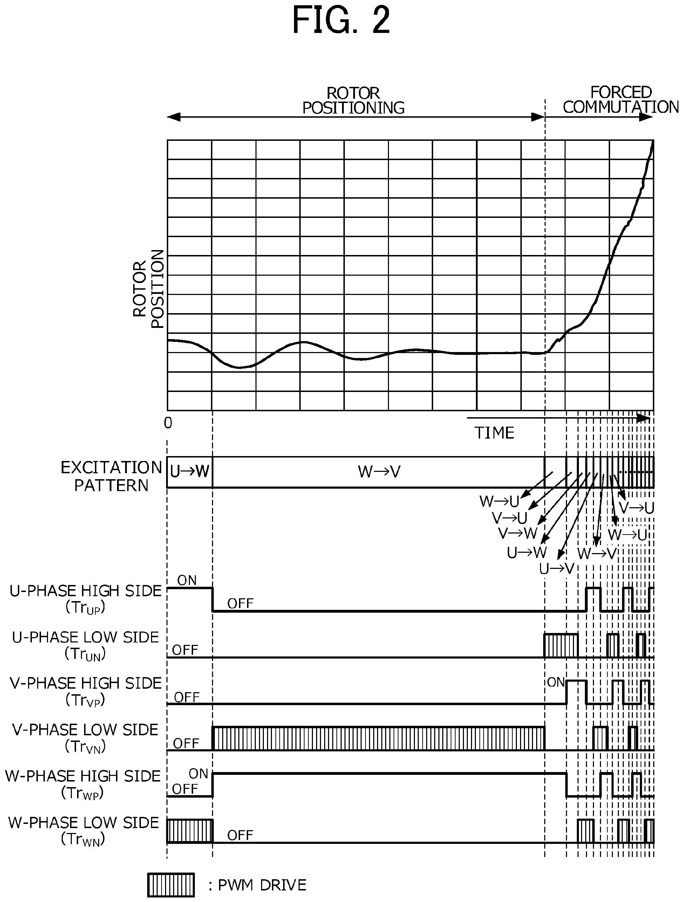

Now an embodiment of the present invention will be described with reference to the drawings. FIG. 2 is a block diagram illustrating a configuration of a control device according to one embodiment of the present invention. This control device is configured to drive a motor 1 being a three-phase brushless DC motor by power from a DC power supply 2. The motor 1 does not include a sensor such as a Hall element sensor, for example, for detecting a rotational position of a rotor. The DC power supply 2 generates a power supply voltage V_{DD} from one end of the DC power supply 2, and the other end thereof is coupled to a ground point GND. The motor 1 includes three-phase (U-phase, V-phase, and W-phase) coils coupled by a Y connection (star connection), and in FIG. 2, a point N is a neutral point at which one ends of the three-phase coils are coupled in common.

The control device includes an inverter 11 coupled to the DC power supply 2, the inverter 11 being configured to drive the motor 1 with a rectangular wave, a microprocessor 14 configured to perform a control operation on the motor 1 by a software process to generate a command value for the inverter 11, and a gate drive circuit 15 provided between the microprocessor 14 and the inverter 11, the gate drive circuit 15 being configured to convert the command value from the microprocessor 14 into a drive signal for the inverter 11. The command value from the microprocessor 14 is expressed, for example, by a voltage to be applied to the coil of each of the phases of the motor, however, the gate drive circuit 15 converts the command value into an on/off duty ratio in PWM drive to output a drive signal to the inverter 11.

The inverter 11 has a general configuration used to drive a brushless DC motor, and, for the U-phase, is configured of a high-side (positive side) transistor Tr_{UP} whose drain is coupled to a power supply line to which a power supply voltage V_{DD} is supplied from the DC power supply 2, a low-side (negative side) transistor Tr_{UN} whose drain is coupled to a source of the transistor Tr_{UP}, a diode D_{UP} whose cathode and anode are respectively coupled to the drain and the source of the transistor Tr_{UP}, a diode D_{UN} whose cathode and anode are respectively coupled to the drain and the source of the transistor Tr_{UN}, and gate resistances R_{UP}, R_{UN} respectively coupled to the gates of the transistors Tr_{UP}, Tr_{UN}. The other end of the U-phase coil of the motor 1 is coupled to a coupling point of the source of the transistor Tr_{UP} and the drain of the transistor Tr_{UN}. The source of the low-side transistor Tr_{UN} is coupled to the ground point GND. A drive signal from the gate drive circuit 15 is applied to the gates of the transistors Tr_{UP}, Tr_{UN} via the gate resistances R_{UP}, R_{UN}. For example, a power field effect transistor (power FET) is used for the transistors Tr_{UP}, Tr_{UN}. The diodes D_{UP}, D_{UN} are provided to return the current by self-induction of the coil of the motor 1 or a regenerative current.

Similarly, the inverter 11, for the V-phase, includes a high-side transistor Tr_{VP}, a diode D_{VP} provided in parallel to the transistor Tr_{VP}, a low-side transistor Tr_{VN}, a diode D_{VN} provided in parallel to the transistor Tr_{VN}, and gate resistances R_{VP}, R_{VN}, and the other end of the V-phase coil is coupled to a mutual coupling point of the transistors Tr_{VP}, Tr_{VN}. The inverter 11, for the W-phase, includes transistors Tr_{WP}, Tr_{WN}, diodes D_{WP}, D_{WN}, and gate resistances R_{WP}, R_{WN}, and the other end of the W-phase coil is coupled to a mutual coupling point of the transistors Tr_{WP}, Tr_{WN}.

The microprocessor 14 contains an analog/digital (A/D) conversion circuit 16 configured to detect the power supply voltage V_{DD}, and A/D conversion circuits 16_{U}, 16_{V}, 16_{W} configured to respectively detect terminal voltages of U-phase, V-phase and W-phase coils of the motor 1. In the control device, a voltage divider circuit where the resistances R₁, R₂ are coupled in series is coupled in parallel to the DC power supply 2, and voltages of the resistances R₁, R₂ at the coupling points are input to the A/D conversion circuit 16. A terminal of the U-phase coil of the motor 1, that is, an end coupled to the transistors Tr_{UP}, Tr_{UN} out of ends of the U-phase coil, is coupled with one end of the voltage divider circuit where the resistances R_{U1}, R_{U2} are coupled in series, the other end of the voltage divider circuit is grounded, and voltages of the resistances R_{U1}, R_{U2} at coupling points, that is, the divided terminal voltages are input to the A/D conversion circuit 16_{U}. Likewise, a voltage divider circuit comprised of the resistances R_{V1}, R_{V2} is provided for the terminal of the V-phase coil, a terminal voltage divided by the voltage divider circuit is input to the A/D conversion circuit 16_{V}, a voltage divider circuit comprised of the resistances R_{W1}, R_{W2} is provided for the terminal of the W-phase coil, and a terminal voltage divided by the voltage divider circuit is input to the A/D conversion circuit 16w. The power supply voltage V_{DD} detected by the A/D conversion circuit 16 is used by the microprocessor 14 for performing control based on the power supply voltage V_{DD}. As described later, in the control device of the present embodiment, when drive of the motor is switched from forced commutation to controlled commutation, a non-energization period is interposed, and, during the non-energization period, an induced voltage is generated at the terminal of the coil of each of the phases of the motor 1 as the rotor rotates. The A/D conversion circuits 16u, 16v, 16w are used to detect the rotational position of the motor during controlled commutation and are also used to detect the induced voltage in the non-energization period. The A/D conversion circuits 16_{U}, 16_{V}, 16_{W} of each of the phases and the resistances R_{U1}, R_{U2}, R_{V1}, R_{V2}, R_{W1}, R_{W2} constituting the voltage divider circuit of each of the phases, constitute a voltage detector configured to detect the voltage of the terminal of the motor 1. Components of the microprocessor 14 other than the A/D conversion circuits 16, 16_{U}, 16_{V}, 16_{W} constitute a controller configured to drive the motor 1.

Next, the microprocessor 14 will be described. The microprocessor 14 is a general one used for driving and controlling a sensorless brushless DC motor, in particular, in the control device of the present embodiment, the microprocessor 14 is configured to energize the motor 1, at the start of the motor 1, during a first period in any first excitation pattern, to energize the motor 1, after the first period, during a second period longer than the first period in a second excitation pattern advanced from the first excitation pattern by a predetermined angle in a rotation instruction direction, and to start, after the second period, driving of the motor 1 by forced commutation so that the motor 1 rotates from a rotational position corresponding to the second excitation pattern. A step of energizing the motor 1 in the first excitation pattern during the first period is referred to as a first energization step, and a step of energizing the motor 1 in the second excitation pattern during the second period is referred to as a second energization step.

Further, when driving the motor 1 by forced commutation, the microprocessor 14 shortens a switching interval of the excitation pattern so that the rotational speed of the rotor of the motor 1 increases at a predetermined rate of increase, and stops the energization of the motor 1 when the rotational speed reaches a predetermined value. That is, the microprocessor 14 is configured to cause the motor 1 to transition to the non-energization period during which the output from the inverter 11 is stopped, and after the non-energization period, restart energization of the motor 1 and start driving of the motor 1 by controlled commutation. In the non-energization period, the motor 1 rotates with inertia and the induced voltage mentioned above is generated at the terminal of each of the phases of the motor 1. The induced voltage of each of the phases is an AC signal having a frequency and a phase corresponding to the rotational speed of the motor 1 and the rotor position, respectively. Thus, the microprocessor 14 determines, during the non-energization period, for example, a zero crossing point in the induced voltage of each of the phases, determines the rotor position of the motor 1 based on the timing of the zero crossing point, and starts driving the motor 1 by controlled commutation using the excitation pattern based on the determined rotor position and the excitation pattern switching timing.

FIG. 2 illustrates a relationship between the rotor position of the motor 1 and the excitation pattern used to energize the motor 1 in a period from the start of the motor 1 until immediately after the start of forced commutation. Furthermore, how the transistors Tr_{UP}, Tr_{UN}, Tr_{VP}, Tr_{VN}, Tr_{WP}, Tr_{WN} in the inverter 11 are being controlled is also illustrated, for each excitation pattern being used, in the form of a timing chart. Here, assuming that the motor 1 is rotated in a certain direction (referred to as the rotation instruction direction), the excitation pattern is switched in the order of W-> U, V-> U, V-> W, U-> W, U-> V, W-> V and returned to the first W-> U to rotate the motor 1 in this direction. In the present embodiment, when starting the stopped motor 1, the microprocessor 14 energizes the motor 1 in the first excitation pattern during the first period having a length of 100 milliseconds, for example. Here, it is assumed that U-> W is the first excitation pattern. As a result, the rotor of the motor 1 tries to move to a position corresponding to U-> W. When the motor 1 is energized by U-> W, switching for the PWM drive may be performed in either the U-phase high-side transistor Tr_{UP} or the W-phase low-side transistor Tr_{WN}, and here, the switching is performed in the W-phase low-side transistor Tr_{WN}. As a result of the switching for the PWM drive, the transistor Tr_{WN} will repeat an ON state, that is, a conduction state, and an OFF state, that is, a cut-off state. The U-phase high-side transistor Tr_{UP} is in the ON state, and the remaining transistors Tr_{UN}, Tr_{VP}, Tr_{VN}, Tr_{WN} are in the OFF state.

Next, after the end of the first period, the microprocessor 14 energizes the motor 1 in the second excitation pattern during the second period having a length of a few hundred milliseconds, for example. Here, it is assumed that W-> V is the second excitation pattern. W-> V is an excitation pattern advanced by 120° in the rotation instruction direction of the motor 1 when viewed from the excitation pattern U-> W. When the motor is energized with W-> V, the rotor of the motor 1 tries to move to a position corresponding to W-> V. As illustrated, the rotor moved to the position corresponding to W-> V vibrates around the position corresponding to W-> V, however, this vibration gradually converges, and near the end of the second period, the rotor is almost completely stationary at the position corresponding to W-> V. As a result, the rotor is positioned at the position corresponding to W-> V by the first period and the second period. The length of the second period is determined according to the time required for the rotor to settle to the position corresponding to W-> V. When the motor is energized with W-> V, the W-phase high-side transistor Tr_{WP} is turned on, and the V-phase low-side transistor Tr_{VN} is PWM driven.

In the present embodiment, energization is performed in the excitation pattern U-> W in the first period to move the rotor, and further, energization is performed in the excitation pattern W-> V in the second period to position the rotor, because, depending on an initial position of the rotor, for example, when an orientation of the rotor is W-> U (in a direction opposed by 180° to U-> W), the rotor does not try to move to the position corresponding to U-> W, even if energization is performed with U-> W in the first period. Here, energization with U-> W is performed in the first period and energization with W-> V is performed in the second period, however, any excitation pattern may be used for the energization in the first period, and in the second period, an excitation pattern advanced from the excitation pattern of the first period by 120°, for example, (which may be 60° or 240°) in the rotation instruction direction may be used.

After the end of the second period, forced commutation is started, however, at the start of the forced commutation, that is, at the end of the second period, the position of the rotor is the position corresponding to W-> V, and thus, the forced commutation is started by energizing the motor 1 in the excitation pattern W-> U after W-> V in the rotation instruction direction. Afterwards, the excitation pattern is switched in the order of V-> U, V-> W, U-> W, U-> V, W-> V, ... during the forced commutation. Further, the switching intervals of these excitation patterns are gradually shortened so that the rotational speed of the rotor increases at a predetermined rate of increase during the forced commutation.

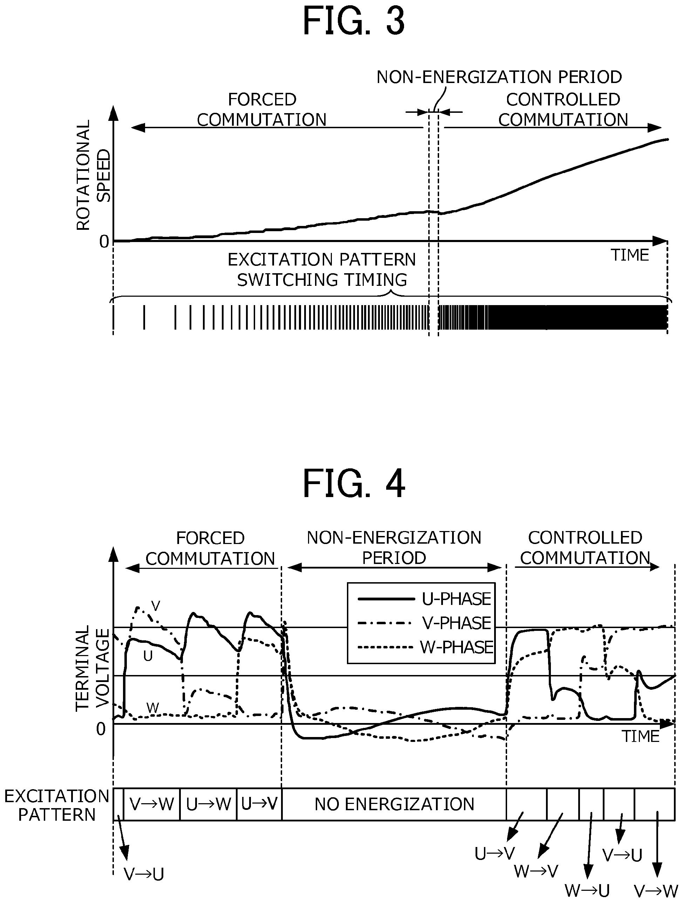

When the rotational speed of the rotor reaches a predetermined value by driving by the forced commutation, energization of the motor 1 is stopped to rotate the motor 1 with inertia in a non-energization period, and drive of the motor 1 by controlled commutation is started after the end of the non-energization period. FIG. 3 illustrates a change in rotational speed of the rotor of the motor 1 in transitioning from forced commutation to controlled commutation through the non-energization period, and FIG. 4 illustrates a relationship between the terminal voltage of the coil of each of the phases and the excitation pattern in a period interposing the non-energization period. Each line segment indicated as an excitation pattern switching timing in FIG. 3 indicates that switching of the excitation pattern is performed at that timing. As the motor 1 accelerates, the intervals of the switching timing become shorter. During the non-energization period, the motor 1 is of course not energized, and thus, no excitation pattern exists. In the present embodiment, the rotational position of the rotor of the motor 1 is determined from the induced voltage in the terminal of the coil of each of the phases detected by the A/D conversion circuits 16u, 16v, 16w in the non-energization period, energization of the motor 1 is restarted using the excitation pattern based on the determined rotational position and the excitation pattern switching timing, and drive of the motor 1 is started by controlled commutation. When the position of the rotor is determined from the induced voltage, it is possible to detect, for example, the zero crossing point in the terminal voltage of each of the phases to determine the position of the rotor based on the timing of the zero crossing point. Preferably the length of the non-energization period is longer than the time corresponding to one half of a circumference at the rotational speed during that time to precisely detect the zero crossing point, and more preferably, longer than the time corresponding to two-thirds of the circumference.

According to the control device of the embodiment described above, after positioning the rotor of the motor 1 using the first period and the second period, forced commutation is started, and after the forced commutation, the non-energization period is provided to detect the induced voltage generated in the terminal of the coil of the motor, and the position of the motor is determined based on the induced voltage detected during the non-energization period to move to controlled commutation, and thus, occurrence of a step-out can be prevented during the forced commutation and a smooth transition from the forced commutation to the controlled commutation is possible.

In the control device described above, the motor 1 rotates with inertia during the non-energization period, and thus, the rotational speed of the motor 1 decreases slightly. Therefore, while a longer non-energization period is set, the rotational speed of the motor 1 is calculated from the induced voltage detected a plurality of times in the non-energization period, and when controlled commutation is started, an acceleration can be set based on the calculated rotational speed. By setting the acceleration as above, the motor 1 can be accelerated more smoothly when transitioning to the controlled commutation.

Further, in the control device described above, when the motor 1 is energized in the second excitation pattern to position the rotor in the second energization step, the rotor vibrates around the position corresponding to the second excitation pattern. The length of the second period is set based on a time until the vibration converges and the rotor settles, and the longer the second period, the longer the overall start-up time. The period of the vibration of the rotor depends on the inertia of the motor also including a load and the magnetic attractive force between the rotor and the stator in the motor, and the attractive force is proportional to an excitation current of the motor. The excitation current is proportional to the voltage to be applied to the motor 1 (here, a duty ratio in PWM drive), and thus, a voltage to be applied to the motor 1 may be adjusted based on the inertia of the motor 1 including a load to change a vibration period of the rotor and converge the vibration of the rotor early. An adjusted value of the voltage to be applied to the motor 1 is determined by calculation when the motor is designed or when the load to be coupled to the motor is designed, or by actually operating the motor to measure the vibration period. When the voltage to be applied to the motor 1 in the second period is adjusted, the vibration of the rotor in the second period can be converged early, and the overall start time of the motor 1 can be shortened.

### [Description of the Symbols]

- 1: Motor
- 2: DC power supply
- 11: inverter
- 14: microprocessor
- 16, 16u, 16v, 16w: A/D conversion circuit

## Claims

1. A control method of starting a motor (1) that is a brushless DC motor including no sensor configured to detect a rotational position of a rotor, **characterized in that**, the control method comprising:
a first energization step of energizing the motor (1) during a first period in any first excitation pattern at a start of the motor (1); and
a second energization step of energizing the motor (1), after the first energization step, during a second period longer than the first period in a second excitation pattern advanced from the first excitation pattern by a predetermined angle in a rotation instruction direction, wherein
after the second energization step, drive of the motor (1) by forced commutation is started so that the motor (1) rotates from a rotational position corresponding to the second excitation pattern.

2. The control method according to claim 1, wherein the brushless DC motor is a three-phase brushless DC motor, and the predetermined angle is 120°.

3. The control method according to claim 1 or 2, wherein a voltage to be applied to the motor (1) in the second energization step is adjusted based on inertia of the motor (1) including a load.

4. The control method according to any one of claims 1 to 3, wherein, during the drive by forced commutation, the motor (1) is driven by shortening a switching interval of an excitation pattern so that a rotational speed of the rotor of the motor (1) increases at a predetermined rate of increase,
when the rotational speed reaches a predetermined value, energization of the motor (1) is stopped to rotate the motor (1) with inertia in a period provided as a non-energization period, and an induced voltage generated at a terminal of the motor (1) in the non-energization period is detected, and
the rotational position of the motor (1) is determined from the detected induced voltage, and energization of the motor (1) is restarted using an excitation pattern based on the determined rotational position and an excitation pattern switching timing, to start drive of the motor (1) by controlled commutation.

5. The control method according to claim 4, wherein the induced voltage is detected a plurality of times in the non-energization period to calculate the rotational speed of the motor (1), and an acceleration is set based on the calculated rotational speed when energization of the motor (1) is restarted.

6. A control device for starting a motor (1) that is a brushless DC motor including no sensor configured to detect a rotational position of a rotor, **characterized in that**, the control device comprising:
an inverter (11) coupled to a terminal of each coil of the motor (1) and configured to energize the coil by PWM drive; and
a controller configured to control drive of the motor (1) by controlling the inverter (11), the controller being configured to control the inverter (11) so that: at a start of the motor (1), the motor (1) is energized during a first period in any first excitation pattern; after the first period, the motor (1) is energized during a second period longer than the first period, in a second excitation pattern advanced from the first excitation pattern by a predetermined angle in a rotation instruction direction; and after the second period, drive of the motor (1) by forced commutation is started so that the motor (1) rotates from a rotational position corresponding to the second excitation pattern.

7. The control device according to claim 6, wherein the brushless DC motor is a three-phase brushless DC motor, and the predetermined angle is 120°.

8. The control device according to claim 6 or 7, wherein a voltage to be applied to the motor (1) in the second period is adjusted based on inertia of the motor (1) including a load.

9. The control device according to any one of claims 6 to 8, further comprising a voltage detector (16_{U}, 16_{V}, 16_{W}, R_{U1}, R_{U2}, R_{V1}, R_{V2}, R_{W1}, R_{W2}) configured to detect a voltage of the terminal of the motor (1), wherein
the controller is configured to: during the drive by forced commutation, drive the motor (1) by shortening a switching interval of an excitation pattern so that a rotational speed of the rotor of the motor (1) increases at a predetermined rate of increase; when the rotational speed reaches a predetermined value, stop energization of the motor (1) to rotate the motor (1) with inertia in a period provided as a non-energization period, and determine the rotational position of the motor (1) from an induced voltage detected by the voltage detector (16_{U}, 16_{V}, 16_{W}, R_{U1}, R_{U2}, R_{V1}, R_{V2}, R_{W1}, R_{W2}) in the non-energization period; and restart energization of the motor (1) using an excitation pattern based on the determined rotational position and an excitation pattern switching timing, to start drive of the motor (1) by controlled commutation.

10. The control device according to claim 9, wherein the controller calculates the rotational speed of the motor (1) from the induced voltage detected a plurality of times in the non-energization period and sets an acceleration based on the calculated rotational speed when energization of the motor (1) is restarted.
